# EUROPEAN PATENT APPLICATION

(11) **EP 4 528 672 A1**
(43) Date of publication of application: **26.03.2025**
(21) Application number: 23198940.1
(22) Date of filing: 21.09.2023
(51) Int. Cl.: G06V 10/82, G06V 20/56, G06V 40/20

(54) **USER-INTERACTION WITH A VEHICLE**

(71) Applicant: Valeo Comfort and Driving Assistance, 94000 Créteil (FR)
(72) Inventor: BARAKAT, Basem, 94000 Créteil (FR)
(74) Representative: Delplanque, Arnaud

(57) **Abstract**

The disclosure notably relates to a method of user-interaction with a vehicle. The method comprises, by a user, approaching the vehicle from the outside. The method also comprises, by the vehicle, capturing video data of the user. The method also comprises, by the user, while being outside the vehicle and while the vehicle captures the video data of the user, performing a predetermined gesture or taking a predetermined posture. The method also comprises by the vehicle, determining that the user is an authorized user and, by a respective neural network function and based on at least a respective portion of the video data, recognizing the predetermined gesture or the predetermined posture. The method also comprises if the user is an authorized user, performing one or more corresponding actuations.

## Description

### TECHNICAL FIELD

The disclosure relates to the field of automotive systems, and more specifically to a method, a vehicle and program for user-interaction with a vehicle.

### BACKGROUND

A number of systems are offered on the market for performing user-interactions with vehicles, for example for unlocking, a door of the vehicle and/or starting the vehicle. Existing systems mostly rely on a user being in direct contact with the vehicle or using a device for interacting with the vehicle, e.g., a physical key or key fob. However, the interaction may be cumbersome to the user in some situations.

Within this context, there is still a need for an improved method for user interaction with a vehicle.

### SUMMARY

It is therefore provided a method of user-interaction with a vehicle. The method comprises, by a user, approaching the vehicle from the outside. The method also comprises, by the vehicle, capturing video data of the user. The method also comprises, by the user, while being outside the vehicle and while the vehicle captures the video data of the user, performing a predetermined gesture or taking a predetermined posture. The method also comprises by the vehicle, determining that the user is an authorized user and, by a respective neural network function and based on at least a respective portion of the video data, recognizing the predetermined gesture or the predetermined posture. The method also comprises if the user is an authorized user, performing one or more corresponding actuations.

The method may comprise one or more of the following:
- determining that the user is an authorized user is performed by a respective neural network function based on at least a respective portion of the video data;
- determining that the user is an authorized user is performed by face recognition;
- determining that the user is an authorized user is performed by a segmentation on the at least a respective portion of the video data, the segmentation outputting a segment corresponding to the user, and recognizing the face of the user from the segment;
- the neural network function is configured to recognize each one of a set of one or more predetermined gestures, the set of predetermined gestures comprising both of or at least one of:
   ∘ a first gesture comprising, by the user, pulling an arm in an outward direction with respect to the vehicle, optionally further waving the hand in a direction orthogonal to the outward direction, the one or more actuations corresponding to the first gesture optionally comprising unlocking and/or opening the door; and
   ∘ a second gesture comprising, by the user, pushing an arm in an inward direction with respect to the vehicle, optionally further closing the hands of the hand, the one or more actuations corresponding to the second gesture optionally comprising closing and/or locking the door;
- the method further comprises providing an indicator of performance of the one or more actuations, the indicator being one of:
   ∘ emitting a sound;
   ∘ illuminating a light source such as LED;
   ∘ displaying a message;
- the vehicle comprises at least two cameras configured to capture a respective video signal, each camera being positioned at a respective lateral side of the vehicle, the two video signals forming the video data;
- each camera is a wide-angle camera such as a surround camera, each camera having a viewing angle between 180° and 200°; and
- each camera is configured to detect a field of view of at least 6 meters.

It is further provided a computer program comprising instructions, which when executed by one or more processors of a vehicle, cause the vehicle to perform the method.

It is further provided computer readable storage medium having recorded thereon the computer program.

It is further provided a vehicle having one or more processors coupled to a memory, the memory having recorded the computer program. The vehicle is thereby configured for performing the method.

### BRIEF DESCRIPTION OF THE DRAWINGS

Non-limiting examples will now be described in reference to the accompanying drawings, where:

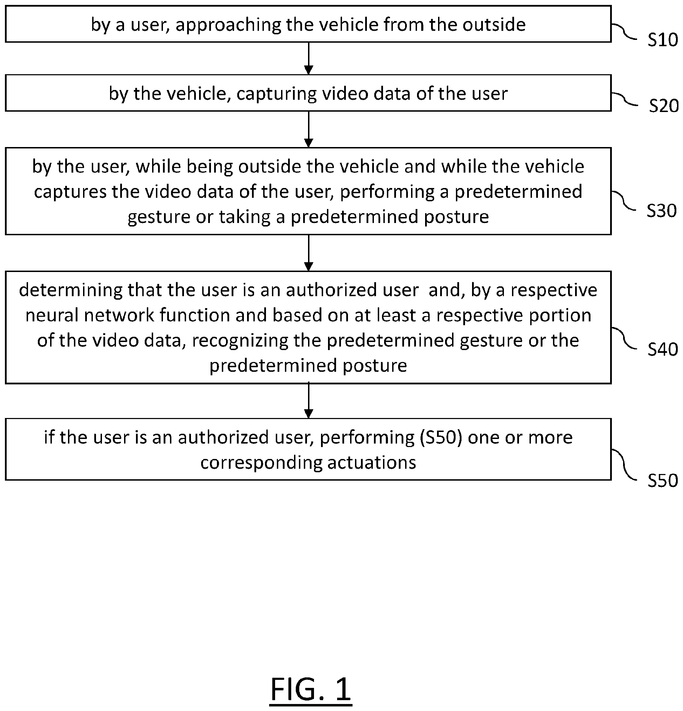

- FIG. 1 shows a flowchart of an example of the method; and
- FIG.s 2 to 4 illustrate the method.

### DETAILED DESCRIPTION

With reference to the flowchart of FIG. 1, a method of user-interaction with a vehicle is discussed. The method comprises, by a user, approaching S10 the vehicle from the outside. The method also comprises, by the vehicle, capturing S20 video data of the user, e.g. with one or more video cameras of the vehicle. The method also comprises, by the user, while the user is outside the vehicle and while the vehicle is capturing the video data of the user, performing S30 a predetermined gesture or taking a predetermined posture. The method also comprises, by the vehicle (e.g. by one or more processors of the vehicle), determining S40 that the user is an authorized user, and based on at least a respective portion of the video data(e.g. by a respective neural network function), recognizing the predetermined gesture or (respectively) the predetermined posture. The method also comprises, if the user is an authorized user, the vehicle performing S50 one or more corresponding actuations.

Such a method improves the user interaction with the vehicle.

Notably, the method is highly ergonomic and convenient. The user may be located outside the vehicle, and the vehicle may only acquire the video data from the user. Indeed, the actuation by the vehicle upon the user's gesture is transparent to the user and thus the user-interaction with the vehicle is highly ergonomic. This avoids the need to carry any physical device for performing the actuation such as physical keys, key fobs, smart cards, or smartphones, or to be in contact with the vehicle to unlock and start the vehicle. Indeed, these devices require the user to carry a physical device and are not ergonomic, secure, or robust, as these may be lost, stolen, damaged, forgotten, or hacked. Moreover, people with physical impairments or limited movement are not required to be in direct contact with the vehicle. The user may be at a distance from the vehicle when performing the predetermined gesture or taking the predetermined posture, for example a distance from the closest point of the vehicle above 50 cm and/or below 5 meters. In the case of the method, the corresponding actuation is triggered ergonomically thanks to the user of the acquired video data. The method is also secure thanks to the method determining that the user is an authorized user. Thereby the corresponding actuation is only allowed for an authorized user.

It is further provided a vehicle configured for performing the method. The vehicle may comprise one or more processors coupled to a non-volatile memory. The one or more processors may be part of a computer (such as an onboard computer) configured to perform the corresponding actuation. The vehicle may comprise one or more LEDs. The one or more LEDs may be placed anywhere on the vehicle, for example on at least one door of the vehicle, on the front of the vehicle and/or under the frame of the vehicle (also called underglow LEDs). The vehicle may comprise a speaker and/or a screen configured for displaying a message. The memory may have recorded thereon a computer program comprising instructions for performing the method.

At least some steps of the method, e.g., the steps performed by the vehicle are computer-implemented. This means that steps (or substantially all the steps) of the method are executed by at least one or more processors on, e.g., computer, or any system alike installed on the vehicle, such as a console board.

The method is for user-interaction with a vehicle. In other words, the method comprises, by the user, performing one or more actions, and, by the vehicle, mapping a corresponding action to a corresponding actuation. In examples, the driver's seat of the vehicle may be empty while the method performs. In other words, the user may control the vehicle from the outside, with no one in the driver's seat. Further optionally, the vehicle may be empty while the method performs. Further optionally, the vehicle may be locked while the method performs. The actuation may comprise at least one of an ignition, a parking, an unlocking of the door, an opening of the door, a closing of the door and/or a locking of the door.

The user approaches the vehicle from the outside at S10. In other words, the user may move to be in proximity to the vehicle from the outside, e.g., from a side of the vehicle such as the side of the door of the pilot. For example, the user may come to a a distance from the closest point of the vehicle above 50 centimeters and/or below 5 meters, for example a distance above 50 centimeters and/or below 3 meters, or a distance above 1 meter and/or below 5 meters, such a distance between 1 meter and 3 meters.

The vehicle captures video data S20 of the user. By video data it is meant one or more sequences each of one or more images of the user when approaching the vehicle from the outside. Each respective sequence may be obtained by a respective camera. Each respective sequence may thereby cover the environment of the vehicle from a respective viewpoint of the vehicle (the viewpoint being defined by the location and orientation of the camera), thereby allowing the vehicle to capture video data of the user from one or more viewpoints. The images may be RGB images or grayscale images.

The vehicle may comprise at least two cameras. Each of the two cameras may be configured to capture a respective video signal, for example an RGB signal or grayscale signal. Each camera may be positioned at a respective lateral side of the vehicle. Thereby, the vehicle has a field of view on the lateral sides of the vehicle so as to capture the user approaching the vehicle from the outside. The two video signals may form the video data. In other words, the video data may comprise the concomitant data of the two video signals.

Each camera may be a wide-angle camera such as a surround camera. Each camera may have a viewing angle between 180° and 200°, for example 190° for obtaining a view of the surroundings of the vehicle.

Each camera may be configured to detect a field of view of at least 6 meters. In other words, the distance in which each camera can obtain an RGB signal is of at least 6 meters. The distance may be not so limited, and may be adjusted so as to capture the user approaching to the vehicle, for example 8 meters or more. The user may be at a distance of 30 cm or more from the cameras so as to recognize at least part of the user's body.

At S30, while being outside the vehicle and while the vehicle captures the video data of the user, the user performs a predetermined gesture, or the user takes a predetermined posture. The predetermined gesture may be a movement by at least part of the body of the user, e.g., by one or both arms, one or both hands or one or both leg of the user, or by the full body of the user. The predetermined posture may be a static position of the body, in other words a pose of the body of the user at a position outside of the vehicle as captured by the video data. The predetermined posture may comprise for example a chair sitting posture, e.g., performed by a person sitting on a wheel chair. The corresponding action may be moving the car automatically, thereby allowing the person to access the car.

The vehicle determines at S40 that the user is an authorized user. In other words, the method subordinates the execution of the corresponding actuation upon the determination that the user is authorized to control the vehicle through the user interaction. Determining that the user is authorized may comprise extracting a feature (e.g., visual or sound) of the user and comparing it to identify that the user is authorized, e.g., by comparing the extracted feature with corresponding stored features of authorized persons, stored in memory.

Determining S40 that the user is an authorized user may be performed by face recognition. In other words, the method extracts a visual feature (e.g., the face of the user) from the video data (based on the result of the face recognition) and verifies that the user is authorized based on such visual feature. The method may compare the result of the face recognition with a images of faces of authorized persons stored in memory. The method may determine that the user is an authorized user if the result of the face recognition matches substantially an image of a face of an authorized person stored in the memory.

The face recognition may be performed with any kind of algorithm such as a deterministic algorithm. By "deterministic" it is meant that the algorithm does not comprise any probabilistic or random component, excluding for example neural networks.

Additionally or alternatively, determining that the user is an authorized user may comprise determining if the user carries a device associated with the vehicle, e.g., a key-fob associated with the vehicle. In examples, the method may extract a visual feature from the video data corresponding to the key-fob, e.g., as it is held by the user when approaching the vehicle. Alternatively, the method may be configured to receive a signal from the key-fob (e.g., upon the user pressing a button on the key-fob) indicating that the key-fob is associated with the vehicle. Thus, the method uses the gesture recognition as a way of confirming the driver's intention to open or close the door rather than authenticating the user's identity, as the authentication Is performed by the detection of the associated key-fob.

The method may also comprise storing an image of a person's face to be recognized as an authorized person. The method may comprise obtaining an image of the person's face, e.g., by acquiring an image sample from a camera installed on the vehicle. Alternatively, the vehicle may be configured for receiving an image of the person's face, e.g., via an internet connection. The method may comprise processing the image of the person's face, e.g., calibrating the contrast or brightness. The method may store the image of the person's face to be recognized as an authorized person.

The method may also comprise storing new predetermined gestures. In examples, the method may comprise, upon action by the user (e.g., through a user interface on the vehicle) recording a gesture with at least one camera of the vehicle. The gesture may be associated with a corresponding predetermined action on the vehicle, thereby creating a new predetermined gesture. The new predetermined gesture may be stored on memory for performing the action on the vehicle by an authorized person.

Determining S40 that the user is an authorized user may be performed by a (e.g. object) segmentation on the at least a respective portion of the video data. By "segmentation" it is meant any kind of (e.g., deterministic) algorithm to partition images of the respective portion of the video data into multiple parts or regions of pixels, also called segments. The segmentation may be a semantic segmentation or panoptic segmentation. The semantic segmentation may any algorithm that assigns a class label to pixels in the image. In examples, the semantic segmentation may assign a "user" label to pixels representative of the user. The panoptic segmentation cluster the video data into different objects, e.g., persons, and recognize the user.

The segmentation may output a segment corresponding to the user. In other words, the segmentation may output at least one regions of pixels being indicative of the presence of the user as capture by the respective portion of the video data. The method may recognizing the face of the user from the segment. In other words, the method may obtain pixels from the segments being indicative of the face of the user as captured by the video data.

The vehicle determines, by a respective neural network function and based on at least a respective portion of the video data, recognizing the predetermined gesture or the predetermined posture.

The respective neural network function is a computer-implemented/computerized data structure that is a set of layers of neurons defined by two features: topology and parameters (also known as weights). The topology may be a system of connected computing units. The weights may be numerical coefficients which are assigned to each connection. Each computing unit may output a weighted combination of a corresponding input numerical data and sends this result to neighboring computing units according to the connections. The neural network function may comprise initial units which are fed by input data (that is, the signal) and terminal units which yields the output result (that is, the actuation signal). The topology of the network, in combination with the weights assigned to each connection, may establish the flow of data from the initial units all the way down to the terminal units. The weights of the network may be preset. In other words, the weight's values may have been adjusted according to a learning process.

The neural network function may have been trained on a dataset. The dataset may comprise portions of video data. By portion it is meant a sequence of one or more images from the captured video data, e.g., a sequence between an initial time and a final time. Each portion of video data may comprise a predetermined gesture or a predetermined posture of a user.

The neural network function is configured to recognize each one of a set of one or more predetermined gestures. In other words, the neural network function is configured for taking as input the video data and outputting any data indicative of the predetermined gesture of the set of predetermined gestures, for example a segmentation over the video corresponding to one of the predetermined gestures. That is, weights of the neural network function are adjusted so that the output of the neural network function is data indicative of the predetermined gesture, e.g., a gesture for opening the vehicle. The weights of the neural network function may be trained with one or more loss function including, e.g., a self-supervised Lovasz-Softmax loss for performing segmentation on the video data, Lovasz-Softmax and Focal loss for the motion segmentation task and for managing class imbalance and/or a YOLOv3 loss for object detection (optionally with an intersection-over-union (IoU) loss added using a segmentation mask). The Multi-Task learning may use uncertainty to Weigh Losses for the aforementioned losses.

The set of predetermined gestures may comprise a first gesture. The first gesture may comprise, by the user, pulling an arm in an outward direction with respect to the vehicle, for example in an outward direction with respect to a door of the vehicle, e.g., the pilot's door. Optionally the user may further wave the hand in a direction orthogonal to the outward direction, e.g., in a direction parallel to the pilot's door. The one or more actuations corresponding to the first gesture may optionally comprise unlocking and/or opening the door. For example, the user may pull the arm in the outward direction and waving the hand in the direction orthogonal to the outward direction. The corresponding action may be unlocking the door. The user may repeat the predetermined gesture so that the corresponding action is opening the door.

The set of predetermined gestures may comprise a second gesture. The second gesture may comprise, by the user, pushing an arm in an inward direction with respect to the vehicle, an inward direction with respect to the vehicle's hood door. Optionally the user may further close the hands of the hand. The one or more actuations corresponding to the second gesture optionally comprising closing and/or locking the door, e.g., the vehicle's hood door.

The set of predetermined gestures may comprise both the first and second gestures (and the vehicle is configured for recognize each one of them, depending on which is performed by the user), or alternatively the set of predetermined gestures comprises only one (any one) of the first and second gestures.

Determining S40 that the user is an authorized user is performed by another respective neural network function based on at least a respective portion of the video data. The other respective neural network function may be configured to take as input the respective portion of video data and to output a segmentation of the face of the user on the video data. The method may compare the result of the neural network (that is, the segmentation of the face of the user) with images of faces of authorized persons stored in non-volatile memory. The method may determine that the user is an authorized user if the result of the face recognition matches substantially an image of a face of an authorized person stored in the memory.

The respective neural network and the other respective neural network may have been trained concurrently, e.g., at the same time with the same dataset. Alternatively, the respective neural network and the other respective neural network may have been trained separately, e.g., at different locations, at different times and/or by different entities on the same dataset or different datasets.

The method may further comprise providing an indicator of performance of the one or more actuations. The indicator may be one of emitting a sound, illuminating a light source such as LED or displaying a message.

In examples, the method may emit a sound indicating that the corresponding actuation is performed, e.g., by emitting a synthesized sound of the type "opening door" or any other synthesized phrase in the English language or any other language.

In examples, a user may perform the first gesture and the actuation may be unlocking a door, e.g., the pilot's door. The method may further illuminate an LED placed on the respective door.

In examples, the method may perform the corresponding actuation and the method may display a message on an LCD screen. The LCD screen may display the message of the type: "parking the vehicle", or any other phrase in the English language or any other language such as Spanish, French or German.

The method thus detects and confirms the user's intention when performing the predetermined gesture in a convenient, secure and robust manner. The method does not require the driver to touch or present any device, e.g., near the door handle or the ignition switch for opening the door or starting the vehicle respectively. The method also provides feedback and guidance to the driver using colors, sounds, texts, or icons.

Examples are now discussed with reference to FIG.s 2 to 4.

Examples of the method recognize gestures as a way of confirming the driver's intention to open or close the door. The method may use surround cameras and wireless communication to detect and confirm the user's intention in a convenient, secure, and robust way. The method thereby does not require the driver to touch or present any device near the door handle or the ignition switch. The method may also provides feedback and guidance to the driver, e.g., by using colors (displayed on LEDs), sounds, texts (displayed for example with a screen), or icons.

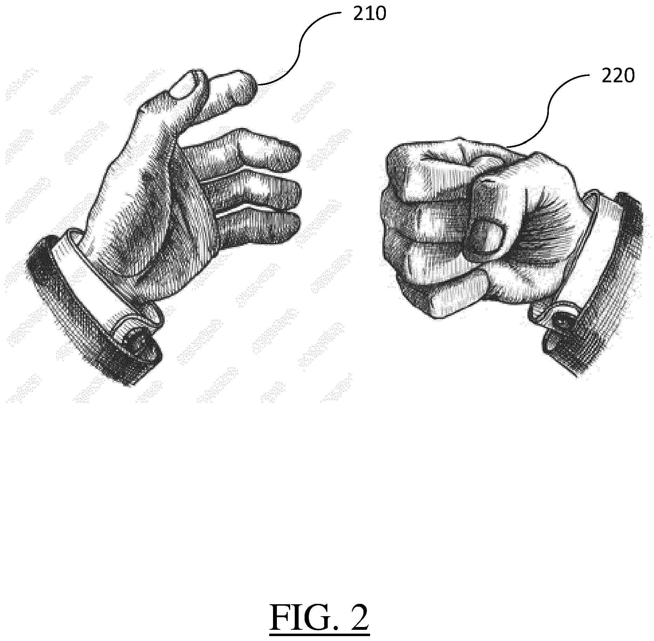

FIG. 2 illustrates the first and second predetermined gestures. The first predetermined gesture 210 may be for opening the door, illustrating waving the hand in a direction parallel to the door. The second predetermined gesture 220 may be for closing the door, e.g., by closing the hand.

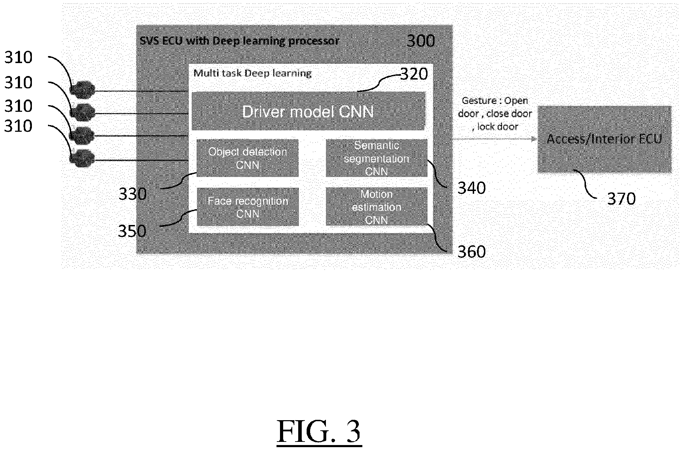

FIG. 3 is a screenshot illustrating the neural network functions for recognizing the set of predetermined gestures from video data and for determining that the user is an authorized person.

The neural network may be implemented on a deep learning processor 300. The processor 300 is connected to surround cameras 310 installed on the vehicle and configured for acquiring the video data of the user. The video data may be fed into the neural network functions. The neural network functions comprise a neural network function 320 for modeling the user (driver). A neural network function 330 may be configured for determining objects on the video data. A neural network function 340 may be configured for performing semantic segmentation and determining groups of pixels corresponding to the user. A neural network function 350 is configured for recognizing the face of the user from the groups of pixels corresponding to the user. A neural network 360 may be configured for determining motion estimation on the video data, so as to determine a predetermined gesture on the recognized user. The neural network may associate the output predetermined gesture with a predetermined action such as opening the door, closing the door or opening the door. The processor 300 may send a signal to an electronic control unit (ECU) 370 for performing the corresponding action.

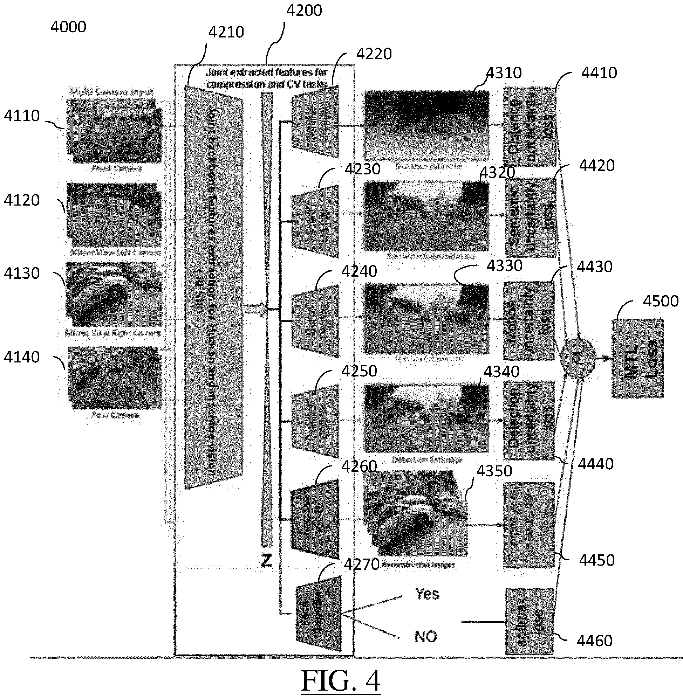

FIG. 4 illustrates an example flowchart 4000 of the neural network function for recognizing the predetermined gesture. The neural network function 4200 takes as input video data from four cameras 4110-4140. The neural network function 4200 may comprise a network for extraction of joint backbone features for human and machine vision, using e.g., a RES18 network. The neural network function 4200 also comprises neural networks for decoding the distance 4220, for performing semantic decoding 4230, for performing motion decoding 4240, for performing detection decoding 4250, for performing compression decoding 4260 and for performing face classification 4270. The neural network function outputs a distance estimate 4310, a semantic segmentation 4320, a motion estimation 4330, a detection estimate 4340, an image reconstruction 4350 and a face estimation as a Boolean result (outputting for example, for each pixel, a corresponding a value if there is a face detection or not, e.g., 1 if there is a face detection on the pixel or 0 if there is no face detection). The neural network function 4200 may be trained with a multi-task learning (MTL) loss 4500. The MTL loss 4500 includes a self-supervised Lovasz-Softmax loss for the segmentation task, a Lovasz-Softmax and Focal loss for the motion segmentation task to manage class imbalance and a YOLOv3 loss object detection, with an intersection-over-union (IoU) loss added using a segmentation mask.

The system is more convenient, as it does not require the driver to carry any physical device with him or her and to touch or present it near the door handle or the ignition switch.

The method is more secure, as it uses encryption and authentication mechanisms to secure the communication between the vehicle and the key, and prevents unauthorized access by checking the proximity between them. The method is more robust, as it can handle different scenarios and errors by using rules or options provided by the customization and preference module and by providing feedback and guidance using sounds, texts, or icons. The method improves the safety and efficiency of parking by reducing human errors, collisions, damages, costs, time.

## Claims

1. A method of user-interaction with a vehicle comprising:
- by a user, approaching (S10) the vehicle from the outside;
- by the vehicle, capturing (S20) video data of the user;
- by the user, while being outside the vehicle and while the vehicle captures the video data of the user, performing (S30) a predetermined gesture or taking a predetermined posture; and
- by the vehicle:
o determining (S40) that the user is an authorized user and, by a respective neural network function and based on at least a respective portion of the video data, recognizing the predetermined gesture or the predetermined posture; and
o if the user is an authorized user, performing (S50) one or more corresponding actuations.

2. The method of claim 1, wherein determining (S40) that the user is an authorized user is performed by a respective neural network function based on at least a respective portion of the video data.

3. The method of claim 1 or 2, wherein determining (S40) that the user is an authorized user is performed by face recognition.

4. The method of claim 3, wherein determining (S40) that the user is an authorized user is performed by a segmentation on the at least a respective portion of the video data, the segmentation outputting a segment corresponding to the user, and recognizing the face of the user from the segment.

5. The method of any one of claims 1 to 4, wherein the neural network function is configured to recognize each one of a set of one or more predetermined gestures, the set of predetermined gestures comprising both of or at least one of:
- a first gesture comprising, by the user, pulling an arm in an outward direction with respect to the vehicle, optionally further waving the hand in a direction orthogonal to the outward direction, the one or more actuations corresponding to the first gesture optionally comprising unlocking and/or opening the door; and
- a second gesture comprising, by the user, pushing an arm in an inward direction with respect to the vehicle, optionally further closing the hands of the hand, the one or more actuations corresponding to the second gesture optionally comprising closing and/or locking the door.

6. The method of any one of claims 1 to 5, wherein the method further comprises providing an indicator of performance of the one or more actuations, the indicator being one of:
- emitting a sound;
- illuminating a light source such as LED;
- displaying a message.

7. The method of any one of claims 1 to 6, wherein the vehicle comprises at least two cameras configured to capture a respective video signal, each camera being positioned at a respective lateral side of the vehicle, the two video signals forming the video data.

8. The method of claim 7, wherein each camera is a wide-angle camera such as a surround camera, each camera having a viewing angle between 180° and 200°.

9. The method of claim 7 or 8, wherein each camera is configured to detect a field of view of at least 6 meters.

10. A computer program comprising instructions, which when executed by one or more processors of a vehicle, cause the vehicle to perform the method of any of claims 1 to 9.

11. A computer readable storage medium having recorded thereon the computer program of claim 10.

12. A vehicle having one or more processors coupled to a memory, the memory having recorded the computer program of claim 10, the vehicle being thereby configured for performing the method of any one of claims 1 to 9.
